(19) Europäisches Patentamt
European Patent Office
Office européen des brevets

(11) **EP 4 752 593 A1**

(12) **EUROPEAN PATENT APPLICATION**

(43) Date of publication:
**03.06.2026 Bulletin 2026/23**

(21) Application number: 25215485.1

(22) Date of filing: **13.11.2025**

(51) International Patent Classification (IPC):
**G01S 7/35** (2006.01)    **G01S 13/34** (2006.01)
**G01S 13/42** (2006.01)    **G01S 13/58** (2006.01)
**G01S 13/87** (2006.01)    **G01S 13/931** (2020.01)

(52) Cooperative Patent Classification (CPC):
**G01S 13/42; G01S 7/356; G01S 13/343;**
**G01S 13/584; G01S 13/878; G01S 13/931**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **02.12.2024 RO 202400763**

(71) Applicant: **NXP B.V.**
**5656 AG Eindhoven (NL)**

(72) Inventors:
• **Rosu, Filip Alexandru**
**5656AG Eindhoven (NL)**
• **Liu, Baokun**
**5656AG Eindhoven (NL)**
• **Brigalda, Adriana**
**5656AG Eindhoven (NL)**
• **Wu, Ryan Haoyun**
**5656AG Eindhoven (NL)**

(74) Representative: **Colaiuda, Antonella**
**NXP Semiconductors Germany GmbH**
**Intellectual Property Group**
**Beiersdorfstraße 12**
**22529 Hamburg (DE)**

(54) **MIMO RADAR WITH OBJECT REFLECTED SIGNAL OVERLAP DETECTION**

(57)    A system and method for processing received radar signal reflections is presented. A range bin matrix is generated from a range-Doppler antenna cube generated using the reflections of the plurality of transmitted radar signals. A a first range bin array that includes a plurality of values associated with different Doppler bins is determined and an offset range bin array that includes the plurality of values of the first range bin array offset by a number of Doppler bins is generated. A first Doppler bin in the first range bin array and the offset range bin array that each include non-zero values is determined and the value associated with the first Doppler bin in the first range bin array is set to a value of zero to generate a corrected range bin array. The radar system determines an estimated direction of arrival using the corrected range bin array.

FIG. 9

**Description**

CROSS-REFERENCE TO RELATED APPLICATIONS

This application claims priority under 35 U.S.C. § 119 to Romanian patent application no. A202400763, filed December 2, 2024, the contents of which are incorporated by reference herein.

TECHNICAL FIELD

The present disclosure is directed in general to radar systems and associated methods of operation. In one aspect, the present disclosure relates to a Doppler-division multiplexing (DDM) multiple-input, multiple-output (MIMO) radar system configured to mitigate Doppler spectrum overlap in signals processed by the radar system.

BACKGROUND

A radar system transmits an electromagnetic signal and receives back reflections of the transmitted signal. The time delay and/or time delay variation between the transmitted and received signals can be determined and used to calculate the distance and/or the speed of objects causing the reflections, respectively. For example, in automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms. Such systems use radar systems as the primary sensor for ADAS operations.

In a radar system, signal processing requires the analysis of range-Doppler datasets when determining the direction of arrival (DOA) of objects represented in those datasets. If the radar system is configured as a Doppler-division multiplexing (DDM) multiple-input, multiple-output (MIMO) radar system there is a risk of Doppler spectrum signal overlap within the dataset, which can reduce the accuracy of any such DOA estimates, particularly when high velocity or nearby objects are located within the vicinity of the radar system.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 shows a block diagram of a DDM MIMO automotive radar system.
FIG. 2 depicts a timing diagram that may be used to determine a sequence of signal transmitted by a DDM-MIMO radar system.
FIG. 3 depicts a plot of the Doppler spectrum as a function of the radian frequency (and Doppler shift) for a uniform DDM-MIMO radar system.
FIG. 4 is a flowchart depicting a method for processing raw data corresponding to sampled return signals corresponding to reflections of transmitted signals that are reflected by objects in an environment around a DDM-MIMO radar system.
FIG. 5 shows an example of such a coherently integrated range-Doppler matrix.
FIG. 6 is a graph depicting Doppler spectrum as a function of the radian frequency (and Doppler shift) for a uniform DDM-MIMO radar system in which signal overlap is present for two objects within a particular Doppler bin.
FIG. 7 is a graph depicting the Doppler spectrum as a function of the radian frequency (and Doppler shift) for a uniform DDM-MIMO radar system in which signals in a particular Doppler bin are adjacent to or partially overlapping one another for two objects.
FIG. 8A is a chart depicting MIMO array data in which a first object has a significantly greater magnitude signal than that associated with a second object.
FIG. 8B is a chart depicting MIMO array data for the second object of FIG. 8A in which object 1 has a significantly greater magnitude signal than that associated with object 2.
FIGS. 8C and 8D illustrate the MIMO data for objects 1 and 2 of FIG. 8A and 8B, respectively, in which the signal overlap regions have been zeroed out, in accordance with the present disclosure.
FIGS. 8E and 8F depict signals for objects 1 and 2 of FIGS. 8A and 8B, respectively, modified to account for signal overlap.
FIG. 9 is graphical depiction of the present approach for detecting object signal overlap within RDBM data and mitigation of data corruption due to that overlap.
FIG. 10 is a flow chart depicting a method for detecting and mitigating Doppler spectrum overlap in DDM MIMO radar system RDBMs.
FIG. 11 is a diagram providing a graphical representation of steps of the method of FIG. 10.
FIG. 12 depicts an example summed range-Doppler map and the corresponding bitmap 1204 that may be generated in accordance with the present bitmap generation approach.
FIG. 13 is a flow chart depicting a method for detecting Doppler spectrum partial signal overlap in DDM MIMO radar system RDBMs and mitigating that overlap based upon the magnitudes of overlapping signal.
FIG. 14 is a diagram providing a graphical representation of steps of the method of FIG. 13.

## DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

Automotive radar systems are used to support advanced driver-assistance system (ADAS) functions like assisted cruise control, emergency braking, and blind spot monitoring and alerts.

Various embodiments described herein relate to Doppler Division Multiplexing (DDM) Multiple-Input Multiple-Output (MIMO) radar systems with integrated object tracking capabilities including a capability of determining direction of arrival (DOA) of detected objects.

In one or more embodiments, an example radar system includes a microcontroller unit (MCU) having a signal processor configured to generate a range-Doppler data set from, for example, raw analog-to-digital (ADC) samples derived from return signals (i.e., reflections) corresponding to reflections of transmit signals (e.g., chirps) transmitted via transmitter (TX) antenna elements of the radar system (e.g., in accordance with a Doppler division scheme having, for example, a uniform pulse repetition interval (PRI)), where the return signals are received via receiver (RX) antenna elements of the radar system. For example, the range-Doppler data sets may be generated by performing range compression (e.g., in the form of a fast-time Fast Fourier transform (FFT)) and Doppler compression (e.g., in the form of a slow-time FFT) on raw ADC samples output by one or more ADCs of receiver modules of the radar system. The signal processor may then perform per-channel DOA estimation by performing a channel dimension FFT for each range-Doppler cell of the range-Doppler data set to generate a respective FFT output matrix for each range bin. The signal processor may then perform DDM decoding based on the FFT output matrices to generate a decoded range-Doppler bit map (RDBM), where each row of the RDBM corresponds to a respective FFT output matrix of the FFT output matrices and, therefore, a respective range bin of the range-Doppler data set. While one or more embodiments described herein involve the use of FFTs, it should be understood that this is intended to be illustrative and not limiting. Other suitable techniques for carrying out Discrete Fourier Transforms (DFTs) may instead be used in accordance with one or more other embodiments.

Standard DDM MIMO technology implies all radar system transmitters being active in the same timeframe, with each transmitter having a respectively different self-induced chirp-to-chirp phase rotation, while maintaining a common and constant Pulse Repetition Frequency (PRF). This results in a sequence of signals being transmitted from each transmitter module that are orthogonal in the Doppler domain, such that the return signal received from each object is replicated at a different velocity in the Doppler domain, depending on the transmitter module (or TX channel) associated with the return signal. These manner in which these replications appear in the Doppler domain is determined by the DDM code, and the order of the replications is required to be known in order to correctly construct the MIMO array. Finding the order of such replication signals in the Doppler domain may be referred to as "decoding" and is equivalent to finding the unambiguous velocity of the corresponding objects within the $\pm\frac{1}{2T_R}$ unambiguous Doppler range, where $T_R$ is the Pulse Repetition Interval (PRI).

Existing solutions for DDM decoding rely on the use of detection algorithms that are susceptible to channel overlap error of the various Doppler velocity-separated replication signals that are present within the Doppler domain. The likelihood that such values may overlap (generating erroneous values) may be increased, for example, in the case of near-range and/or high velocity objects. Overlapping object signals can cause ghost spurs that are consistent throughout multiple frames and can affect DOA estimates, thereby affecting vehicle ADAS decision making.

To mitigate these signal overlap errors, the present disclosure provides a vehicle radar system including a signal processing chain configured to detect potential overlap occurring within an range-Doppler data frame. Data values within the data frame that are associated with overlapping signal values can then be zeroed-out to remove the corrupted range-Doppler cell values from the data frame. In the case of uniform linear arrays (ULA) arrays, these eliminated values can be recovered via autoregressive (AR) extrapolation within the MIMO array and in the case of sparse arrays (SPA) the dictionary and steering vectors can be updated by removing (e.g., zeroing-out) associated lines or columns from the data frame.

In some embodiments, because the reflected signals from smaller objects (i.e., objects with a relatively small radar cross-section as compared to other detected objects) can have a diminished or negligible impact if overlapping signals from larger objects in the RDBM, the present disclosure provides embodiments in which only the influence of the strongest objects (i.e., objects with the largest detected signals within the RDBM) on the signals from weaker objects is compensated, while the effects of smaller objects on larger objects can be ignored.

In specific embodiments of the present disclosure, the signal processor of a radar system is configured to detect cells in a range-Doppler dataset (e.g., an RDBM) storing values resulting from signal overlap occurring within the processed range-Doppler dataset. The signal processor can then zero-out or otherwise modify the value of those cells to reduce the deleterious effects of such overlap. In one example, the signal processor is configured to process the range-Doppler dataset by adding shifted copies of itself to create a summed range-Doppler dataset, where the range-Doppler dataset copies that make up the summed dataset are shifted according to the radar system's DDM codes, which determine TX spacing in Doppler bins.

In situations in which the range-Doppler dataset contain binary data (e.g., the cells of the range-Doppler dataset contain a value of '1' is a signal is present and a value of '0' if no signal is present), if there is sufficient Doppler bin spacing between the signals contained within the range-Doppler dataset, such shifted bitmap addition should not result in any cells of the summed bitmaps containing values great than '1' - that is, none of the cells in the summed bitmaps should contain values of '2' as that would indicate two signals (i.e., two cells having values of '1') overlapping. If cells in the summed range-Doppler dataset have values of '2' or greater, that indicates signal overlap is present and appropriate action can be taken to mitigate the effects of such overlap.

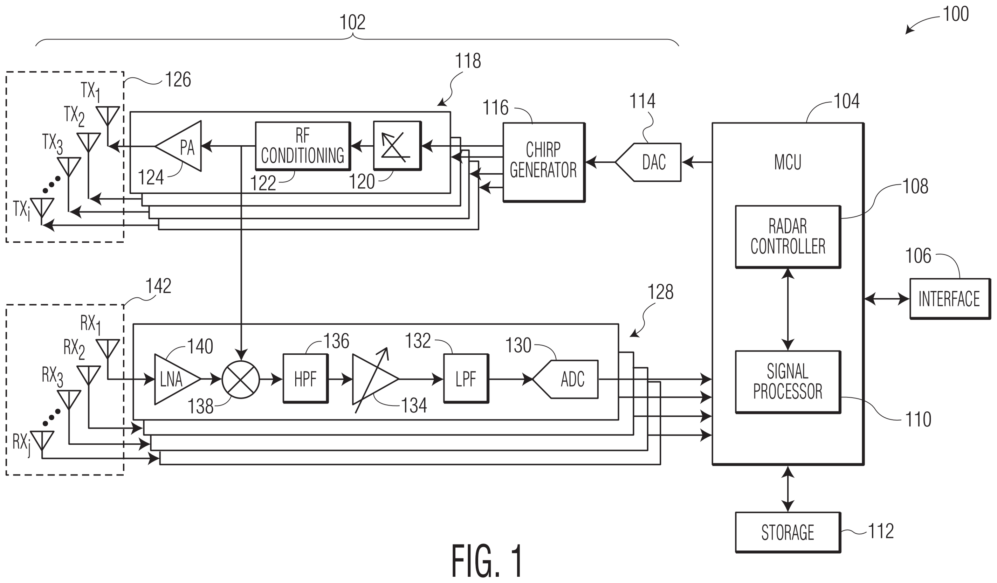

FIG. 1 shows a block diagram of a DDM MIMO automotive radar system 100 that includes a DDM MIMO radar device 102 connected to a radar microcontroller unit (MCU) 104. In one or more embodiments, the device 102 may be a linear frequency modulation (LFM) DDM MIMO radar device. In one or more embodiments, the DDM MIMO radar device 102 may be embodied as a line-replaceable unit (LRU) or modular component that is designed to be replaced quickly at an operating location. Similarly, the radar MCU 104 may be embodied as a line-replaceable unit (LRU) or modular component. Although a single or mono-static DDM MIMO radar device 102 is shown, it will be appreciated that additional distributed radar devices may be used to form a distributed or multistatic radar. In addition, the depicted radar system 100 may be implemented in integrated circuit form with the DDM MIMO radar device 102 and the radar MCU 104 formed with separate integrated circuits (chips) or with a single chip, depending on the application.

The radar device 102 includes one or more transmitting antenna elements 126 (sometimes referred to herein as "transmit antennas 126") and receiving antenna elements 142 (sometimes referred to herein as "receive antennas 142") connected, respectively, to one or more radio frequency (RF) transmitter (TX) modules 118 and receiver (RX) modules 128. Each transmit antenna 126 and TX module may be associated with a respective transmit channel of a group of transmit channels designated herein as $TX_1$, $TX_2$, $TX_3$, ... $TX_i$, where "i" is the total number of transmit (TX) channels. Each receive antenna 142 and RX module 128 may be associated with a respective receive channel of a group of receive channels designated herein as $RX_1$, $RX_2$, $RX_3$, ... $RX_j$, where "j" is the number of receive (RX) channels. As a non-limiting example, a radar device (e.g., the radar device 102) can include individual antenna elements (e.g., antenna elements 126) connected, respectively, to four transmitter modules (e.g., the transmitter modules 118) and sixteen receiver modules (e.g., the receiver modules 128). These quantities of transmitter and receiver antenna elements and modules are intended to be illustrative and not limiting, with other quantities of these elements being possible in one or more other embodiments, such as four transmitter modules 118 and six receiver modules 128, or a single transmitter module 118 and/or a single receiver module 128. The radar device 102 includes a chirp generator 116, which is configured to supply chirp input signals to the transmitter modules 118. To this end, the chirp generator 116 is configured to receive input program and control signals, including, as non-limiting examples, a reference local oscillator (LO) signal, a chirp start trigger signal, and program control signals, from the MCU 104 via a digital-to-analog converter 114. The chirp generator 116 is configured to generate chirp signals and send the chirp signals to the transmitter modules 118 for transmission via the transmitting antenna elements 126. In one or more embodiments, each transmitter module includes a phase rotator 120 (sometimes referred to herein as a "phase shifter 120") that is configured to apply phase coding to the chirp signals, where the phase rotator 120 is controlled by program control signals generated by the MCU 104. The phase rotator 120 may provide a uniform phase shift between transmitter modules 118 in one or more embodiments. The phase rotator 120 may alternatively provide each transmitter module 118 with the ability to implement progressive phase shifting using a non-uniform coding technique, in accordance with one or more other embodiments. Each transmitter module 118 includes an RF conditioning module 122 that is configured to filter the phase-coded chirp signals.

Each transmitter module 118 includes a power amplifier 124 configured to amplify the filtered, phase-coded chirp signal before they are provided to and transmitted via one or more corresponding transmitting antenna elements 126. By using each transmit antenna 126 to transmit progressively phase shifted sequences of chirp signals, each transmitter module 118 operates in a Doppler Division Multiplexing fashion with other transmitter modules of the transmitter modules 118 because they are programmed to simultaneously transmit identical waveforms on a phase-separated schedule. Herein, a transmitted chirp signal is sometimes referred to as a "transmit signal".

The radar signal transmitted by the transmitter antenna modules 118 may by reflected by an object (i.e., a "target object") in an environment of the radar device 102, and part of the reflected radar signal, sometimes referred to herein as a "return signal" or a "reflection", is received by the receiver antenna modules 128 at the radar device 102. At each receiver module 128, the received (radio frequency) antenna signal is amplified by a low noise amplifier (LNA) 140 and then fed to a mixer 138 where it is mixed with the transmitted chirp signal generated by the RF conditioning module 122. The resulting intermediate frequency signal is fed to a high-pass filter (HPF) 136. The resulting filtered signal is fed to a variable gain amplifier 134, which amplifies the signal before feeding it to a low pass filter (LPF) 132. This re-filtered signal is fed to an analog/digital converter (ADC) 130 and is output by each receiver module 128 (e.g., output to the signal processor 110 of the MCU 104) as a digital signal. In this way, the receiver modules 128 compress the target echo of various delays into multiple sinusoidal tones whose frequencies correspond to the round-trip delay of the echo.

In the radar system 100, the radar MCU 104 may be connected and configured to supply input control signals to the radar device 102 and to receive therefrom digital output signals generated by the receiver modules 128. In one or more embodiments, the radar MCU 104 includes a radar controller 108 and a signal processor 110, where either or both of which may be embodied as a micro-controller unit (MCU) or other processing unit. The radar controller 108 can receive data from the radar device 102 (e.g., from the receiver modules 128) and can control radar parameters of the radar device 102, such as frequency band, length of each radar frame, and the like via the DAC 114. For example, the DAC 114 may be used to adjust the radar chirp signals output from the chirp generator 116 included in the radar device 102. The signal processor 110 may be configured and arranged for signal processing tasks such as, but not limited to, object identification, computation of the distance or range to an object, computation of the radial velocity of an object, and computation of the DOA of signals reflected by an object, and the like. Herein, the term "DOA" or "direction of arrival" (sometimes referred to as "AoA" or "Angle-of-Arrival") refers to the angle of a signal (e.g., a radar signal) that is reflected by an object in the environment. The signal processor 110 can provide calculated values associated with such computations to a storage 112 and/or to other systems via an interface 106.

The interface 106 can enable the MCU 104 to communicate with other systems over local and wide area networks, the internet, automotive communication buses, and/or other kinds of wired or wireless communication systems, as non-limiting examples. In one or more embodiments, the MCU 104 can provide the calculated values over the interface 106 to other systems, such as a radar-camera-lidar fusion system; an automated driving assistance system including parking, braking, or lane-change assistance features; and the like. The storage 112 can be used to store instructions for the MCU 104, received data from the radar device 102, calculated values from the signal processor 110, and the like. Storage 112 can be any suitable storage medium, such as a volatile or non-volatile memory.

To control the transmitter modules 118, the radar controller 108 may, for example, be configured to generate transmitter input signals, such as program, control trigger, reference LO signal(s), calibration signals, frequency spectrum shaping signals (such as ramp generation in the case of FMCW radar). The radar controller may, for example, be configured to receive data signals, sensor signals, and/or register programming or state machine signals for RF (radio frequency) circuit enablement sequences. In one or more embodiments, the radar controller 108 may be configured to program the transmitter modules 118 with transmitter input signals to operate in a DDM fashion by progressively phase shifting the LFM chirps to be transmitted by the transmit antenna elements 126. In selected embodiments, the radar controller 108 is configured to progressively phase shift the LFM chirps that are output by the chirp generator 116 with co-prime-coded (CPC) encoding by programming the programmable phase rotator 120 prior to transmission. Each transmitter module 118 emits a transmit channel signal having a different CPC encoded LFM signal generated using a programmable slow-time phase rotator 120, such that the receiver modules 128 can condition the object return signals (i.e., return signals corresponding to reflections of transmit signals that are transmitted via the transmit antenna elements 126, reflected off of one or more objects, where the return signals are then received via the receive antenna elements 142) to generate digital domain signals which are processed by the radar MCU 104 to separate and identify the CPC-encoded transmit channel signals.

At each receiver module 128, digital output signals are generated from target return signals for digital processing by the signal processor 110 to construct and accumulate multiple-input multiple-output (MIMO) array vector outputs forming a MIMO aperture for use in computing plots or maps for DOA estimation and object tracks. In particular, in the signal processor 110, the digital output signals may be processed by one or more fast Fourier transform (FFT) modules or Discrete Fourier Transform (DFT) modules, such as a fast-time (range) FFT module which generates a range chirp antenna cube (RCAC) and a slow-time (Doppler) FFT module which generates a range-Doppler antenna cube. A per-channel DOA estimation module of the signal processor 110 may then perform a respective channel dimension FFT on each range bin of the range-Doppler antenna cube to produce a number of FFT or DFT output matrices (i.e., one per range bin of the range-Doppler antenna cube). A DDM decoder module of the signal processor 110 may then generate a decoded range-Doppler bit map (RDBM) based on the FFT or DFT output matrices, as will be described in more detail, below. The decoded RDBM may be further processed by the signal processor 110 to construct a DDM MIMO array vector which the signal processor 110 then processes to perform DOA estimation and object tracking. The MCU 104 may then output the resulting object tracks (e.g., via the interface 106) to other automotive computing or user interfacing devices for further process or display.

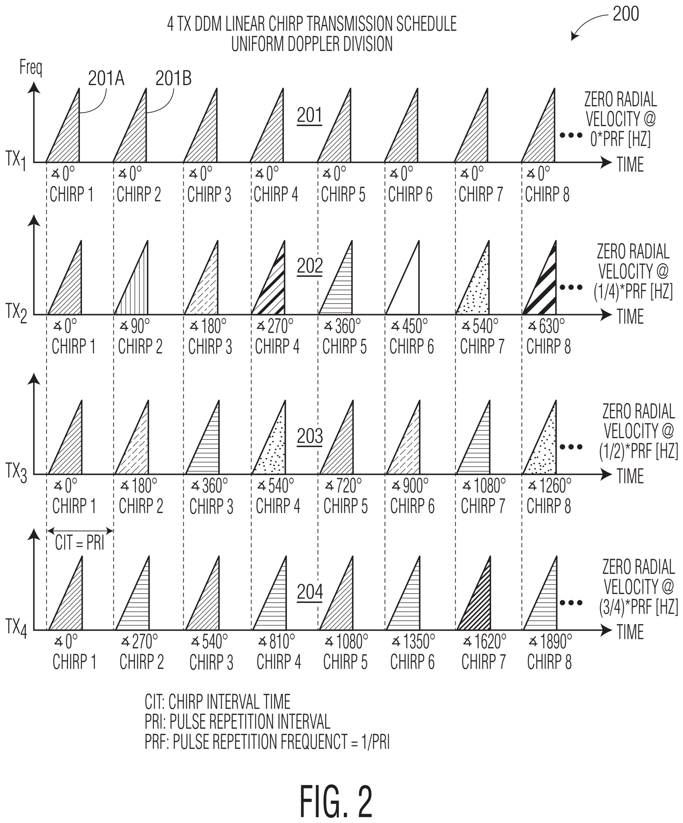

For a contextual understanding of the operation of a DDM MIMO radar system, such as the radar system 100 of FIG. 1, reference is now made to FIG. 2 which shows a timing diagram 200 illustrating the linear chirp transmission schedules 201, 202, 203, 204 of four transmitters (e.g., each respectively corresponding, in one or more embodiments, to a transmitter module 118 and transmit antenna element 126 of FIG. 1) using a uniform Doppler Division scheme. Each transmitter is associated with a respective transmit channel of the transmit channels $TX_1$-$TX_4$ and is programmed to simultaneously transmit a sequence of DDM linear chirp waveforms in a single radar transmission frame. Each transmitter transmits a linear chirp waveform (e.g., 201A, 201B) at a fixed and uniform pulse repetition frequency (PRF) rate which is the inverse of the pulse repetition interval (e.g., PRF=PRI$^{-1}$) or chirp interval time (e.g., PRF=CIT$^{-1}$). In addition, each transmitter encodes each chirp with an additional progressive phase offset by using the phase rotator in the front-end circuit. As a result of the progressive phase offset coding, each of the received chirps corresponding to reflections of radar signals originating from each distinct transmitter effectively has a distinct zero-radial velocity Doppler shift and the individual object detections can be associated with the corresponding transmitter from which the reflected radar signal originated, which is necessary for the correct functioning of the subsequent MIMO virtual array construction.

The location of the zero-radial velocity is controlled by the progressive phase offset applied to each transmitter's chirp based on the following equation:

$$f_{zrv,i} = \frac{A_i}{2\pi} \text{PRF} \text{ [Hz]}$$

where $f_{zrv,i}$ is the zero-radial velocity Doppler shift frequency of transmitter-i, and where $A_i$ is the progressive phase shift (radians) between two adjacent chirps. For example, in a 4-TX DDM MIMO radar system, each transmitter could be assigned the following progressive phase offsets and thus the zero-radial velocity frequencies:

$$TX_1 : A_1 = 0 \ \rightarrow \ f_{zrv,1} = 0 \ [Hz];$$

$$TX_2 : A_2 = \frac{\pi}{2} \ \rightarrow \ f_{zrv,2} = \frac{PRF}{4} \ [Hz];$$

$$TX_3 : A_3 = \pi \ \rightarrow \ f_{zrv,3} = \frac{PRF}{2} \ [Hz];$$

$$TX_4 : A_4 = \frac{3\pi}{2} \ \rightarrow \ f_{zrv,4} = \frac{3*PRF}{4} \ [Hz].$$

In the present example, this result is depicted with the first transmitter, for transmit channel $TX_1$, encoding its chirp waveforms with a progressive phase offset of 0 degrees; the second transmitter, for transmit channel $TX_2$, encoding its chirp waveforms with a progressive phase offset of 90 degrees; the third transmitter, for transmit channel $TX_3$, encoding its chirp waveforms with a progressive phase offset of 180 degrees; and the fourth transmitter, for transmit channel $TX_4$, encoding its chirp waveforms with a progressive phase offset of 270 degrees. In a DDM MIMO radar system with uniform Doppler division, objects can be unambiguously associated to the correct transmitter and TX channel by judging its location within the sectorized Doppler spectrum, provided that the objects have true Doppler shifts within $\pm PRF/(2N_{ch})$ before applying DDM, where $N_{ch}$ is the number of DDM transmitter channels.

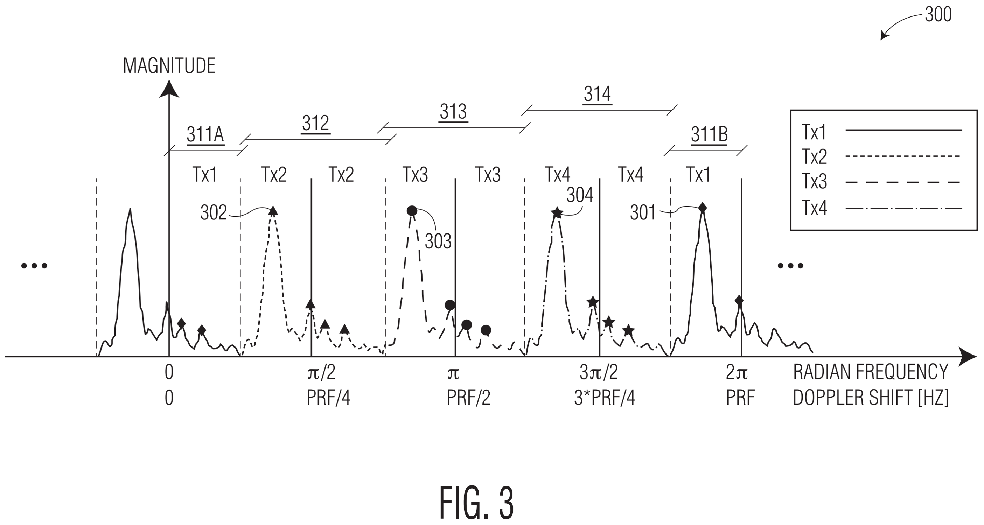

To illustrate the principle of Doppler-peak detection and transmitter association, reference is now made to FIG. 3 which depicts a plot of the Doppler spectrum as a function of the radian frequency (and Doppler shift) for a uniform DDM-MIMO radar system (e.g., an example embodiment of the radar system 100 of FIG. 1) where the maximum radial velocity of the objects does not exceed the allocated spectrum budget, resulting in unambiguous association of target peaks and transmit antenna. As depicted, each transmitter channel $TX_1$-$TX_4$ has a respective allocated spectrum section 311, 312, 313, 314 which is effectively centered around a corresponding zero-radial velocity frequency (e.g., 0, $\pi/2$, $\pi$, and $3\pi/2$). As a result, each object measurement 301, 302, 303, 304 having a true Doppler shift within $\pm PRF/(2N_{ch})$ of the zero-radial velocity frequency for each transmitter channel $TX_1$-$TX_4$ can be unambiguously associated to the correct transmitter by judging its location within the sectorized Doppler spectrum 300. This result holds true while the object's radial speed falls within the allocated spectral budget sections 311, 312, 313, 314 for each transmitter channel $TX_1$-$TX_4$. As shown, the spectral budget section 311 for the transmitter channel $TX_1$ may be split into sections 311A, occurring at the beginning of the period, and 311B, occurring at the end of the period.

With existing 76-81 GHz fast-chirp automotive radar front-end monolithic microwave integrated circuits (MMICs), the fastest chirp signals are limited by a Chirp Interval Time (CIT) that is no shorter than a period of approximately 15 microseconds. As a result, the maximum unambiguous Doppler radial detection speed is $\pm 65$ m/s (or $\pm 234$ km/hr), and the entire extent of detectable speed is then divided into $N_{ch}$ sections for $N_{ch}$ transmitters and transmit channels for unambiguous DDM operation, for such radar systems. In a high dynamic drive scene where objects and radar travels at 100 km/hr speed or faster, the extent of the roughly 470 km/hr Doppler spectrum bandwidth is sufficient only for very few transmitters. While more transmitters and DDM transmitter channels could be supported without incurring ambiguity by significantly shortening the CIT to a period on the order of microseconds, it should be noted that such ultra-short chirps provide additional cost and complexity to the radar systems, given such high dynamic drive conditions.

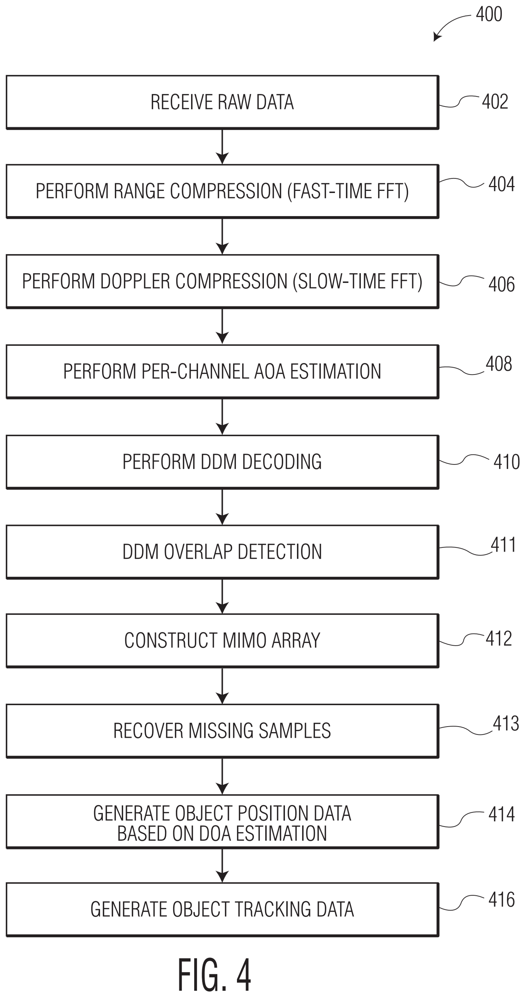

FIG. 4 shows an illustrative process flow for a method 400 in accordance with the present disclosure by which raw data corresponding to sampled return signals corresponding to reflections of transmitted signals (e.g., chirps transmitted in accordance with a DDM scheme, such as that shown in the timing diagram 200 of FIG. 2) that are reflected by objects in an environment around a DDM-MIMO radar system. As described herein, method 400 is configured to detect signal overlap occurring with the radar system's processed RDBMs and mitigate the deleterious effects of such overlap on the radar system's DOA estimation output.

The method 400 may be performed using either or both of a radar controller and signal processor of a radar MCU, in accordance with one or more embodiments. The method 400 is described with reference to elements of the radar system 100 of FIG. 1. However, it should be understood that this is illustrative and not limiting, at least in that other suitable radar systems may be used to carry out the method 400 in one or more other embodiments.

At block 402, the signal processor 110 of the MCU 104 of the radar system 100 receives raw sample data (sometimes referred to as "ADC samples") from one or more ADCs 130 of the receiver modules 128. These ADC samples may be output by the ADCs 130 as digital signals. These ADC samples represent received signals (sometimes referred to as "reflected signals" or "return signals") corresponding to reflections of transmit signals (i.e., chirps) transmitted by the transmitter modules 118 via the transmit antenna elements 126 (e.g., in accordance with a DDM scheme, such as the DDM scheme shown in the timing diagram 200 of FIG. 2), where the transmit signals are reflected off of one or more objects in the environment of the radar system 100. The return signals are received by the receiver modules 128 via the receive antenna elements 142.

At block 404, the signal processor 110 performs range compression of the raw ADC samples by performing a fast-time FFT or DFT on the raw ADC samples, for example. The signal processor 110 may generate a range chirp antenna cube (RCAC) as an output of this fast-time FFT or DFT.

At block 406, the signal processor 110 performs Doppler compression of the RCAC by performing a slow-time FFT or DFT on the RCAC, for example. The signal processor 110 may generate a range-Doppler antenna cube as an output of this slow-time FFT or DFT. The range-Doppler antenna cube may be a three-dimensional array having dimensions $m \times n \times p$, where $m$ represents the number of Doppler bins, $n$ represents the number of range bins, and p represents the number of RX channels (e.g., corresponding to the number of receive antenna elements 142 or the number of receiver modules 128) represented in the range-Doppler antenna cube. Herein, $p$ is sometimes referred to as the "channel dimension" in the context of the range-Doppler antenna cube and range bin matrices extracted therefrom.

Each element of the range-Doppler antenna cube may encode the complex amplitude of a received signal for a particular range bin, Doppler bin, and RX channel. In one or more embodiments, a given RX channel slice of the range-Doppler antenna cube may be represented as a two-dimensional (2D) array of range-Doppler cells, with the complex amplitude of each cell corresponding to the average complex amplitude within a region bound, in Cartesian space, by corresponding pairs of iso-Doppler lines and iso-range lines. That is, the boundaries of each range bin are defined by a corresponding pair of iso-range lines and the boundaries of each Doppler bin are defined by a corresponding pair of iso-Doppler lines. Each range-Doppler cell corresponds to a respective Doppler bin and range bin pair.

Because the transmitter modules 118 transmit chirps simultaneously in a DDM-MIMO radar system, information from all TX channels is represented in each element in the range-Doppler antenna cube. Each range bin represents ranges or distances between the radar system and an object. Each Doppler bin represents Doppler shift values corresponding to velocities at which an object may be traveling (e.g., relative to the ego velocity of the radar system 100). Such velocities may be calculated based on the determined Doppler shift associated with the object.

At block 408, the signal processor 110 performs per-channel (e.g., per-RX-channel) DOA estimation using the range-Doppler antenna cube. In one or more embodiments, the signal processor 110 performs the per-channel DOA estimation by extracting range bins from the range-Doppler antenna cube and performing a channel dimension FFT or DFT on each range-Doppler cell of the extracted range bin to generate FFT or DFT output matrices (i.e., with each FFT or DFT output matrix corresponding to a respective range bin of the range-Doppler antenna cube).

At block 410, the signal processor 110 performs DDM decoding of the range-Doppler antenna cube based on the FFT or DFT output matrices generated by the per-channel DOA estimation performed at block 408 to generate a decoded RDBM. At block 411, the RDBM is processed, as described herein, to determine whether the RDBM encodes values associated with overlapped DDM signals and, if so, those values can be zeroed out or otherwise manipulated to diminish the effects of such overlapped signals on further DOA estimation.

At block 412, the signal processor 110 constructs a virtual MIMO array based on the decoded RDBM and the range-Doppler antenna cube. At block 413, missing sample values (e.g., due the zeroing-out that previously occurred in step 411) can recovered, such as via application of autoregressive algorithms. With such data recovered, at block 414, the signal processor 110 generates object position data based on DOA estimation using the virtual MIMO array.

At block 416, signal processor 110 generates object tracking data based on the object position data.

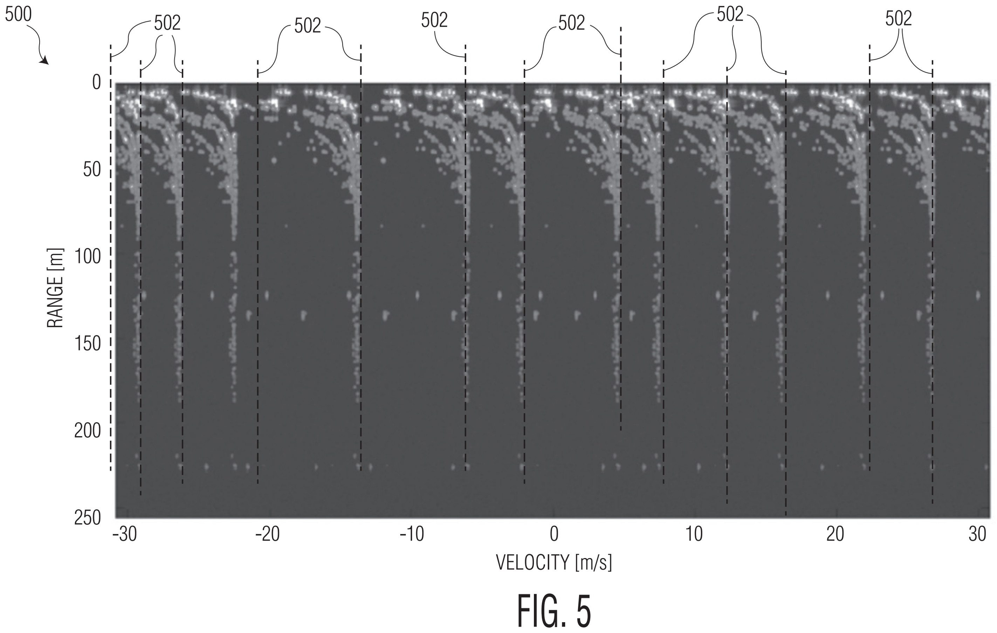

During operations, the signal processor 110 of the radar system 100 generates a range bin matrix from the range-Doppler antenna cube (e.g., generated at block 404, above) and performs a channel dimension FFT on each range-Doppler cell of the extracted range bin matrix to generate an FFT output matrix. That FFT output matrix is used to generate a Doppler bin maxima array, which represents per-column maxima detected in the FFT output matrix. The maxima array can then be combined to generate a coherently integrated RDM. Herein, an RDM may be distinguished from an RDBM in that an RDBM includes a matrix or 2D array of binary values (e.g., 0's and 1's), while an RDM can include a matrix or 2D array of signal amplitudes. FIG. 5 shows an example of such a coherently integrated RDM 500. In the coherently integrated RDM 500 data from each TX channel is encoded according to respective DDM codes for each TX channel, such that each set of TX channel data is represented in the RDM 500 and is offset by a predetermined number of Doppler bins, where the offset is different for each TX channel (e.g., as defined by the corresponding DDM code). Data corresponding to the different transmitters is represented in the multiple doppler bins 502 depicted in FIG. 5. For example, data corresponding to a first TX channel, $TX_1$, representing a velocity of around -30 m/s is disposed in the first Doppler bin 502. Data corresponding to a second TX channel, $TX_2$, representing a velocity of around -28 m/s is disposed in a second Doppler bin 502.

In an ideal coherently integrated RDM 500, there is sufficient Doppler offset between the various multiple doppler bins 502 such that the signals depicted therein do not overlap with one another. However, in situations involving relatively high-velocity objects the signals associated with a particular TX channel, which would not ordinarily overlap signals in other TX channels and would be constrained to a particular Doppler bin, may extend and overlap, thereby corrupting, the signals associated with other TX channels in other Doppler bins.

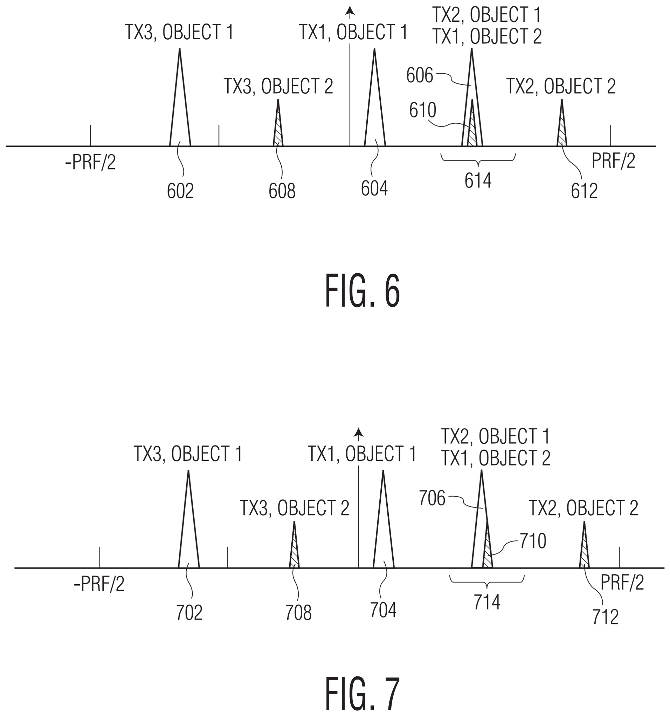

This phenomenon is depicted in FIG. 6, which depicts a plot of the Doppler spectrum as a function of the radian frequency (and Doppler shift) for a uniform DDM-MIMO radar system in which signal overlap is present for two objects (i.e., object 1 and object 2) within a particular Doppler bin. Specifically, peaks 602, 604, and 606 represents the received signals associated with the first object in the associated Doppler bins, while peaks 608, 610, and 612 represent the receives signals associated with the second object in the associated Doppler bins. As illustrated, within Doppler bin 614 signal 606 associated with object 1 and signal 610 associated with object 2 overlap and combine. The depicted overlap may occur, for example, due to a relatively high velocity of one or more of object 1 and object 2. As described herein, this overlap can degrade the fidelity of signals within the corresponding RDM or RDBM and can reduce the accuracy of DOA estimations associated with both objects 1 and 2.

This signal degradation can occur even if the signals associated with two or more objects do not precisely overlap within a particular Doppler bin. For example, signals that are adjacent to one another in the Doppler domain may similarly cause signal degradation and/or corruption due to side lobe values associated with the object signals. To illustrate, FIG. 7 depicts a plot of the Doppler spectrum as a function of the radian frequency (and Doppler shift) for a uniform DDM-MIMO radar system in which signals in a particular Doppler bin are adjacent to one another for two objects (i.e., object 1 and object 2). Specifically, in FIG. 7, peaks 702, 704, and 706 represents the received signals associated with the first object in the associated Doppler bins, while peaks 708, 710, and 712 represent the receives signals associated with the second object in the associated Doppler bins. As illustrated, within Doppler bin 714 signal 706 associated with object 1 and signal 710 associated with object 2 are adjacent to one another. Even though they do not precisely overlap, side lobes associated with the signals of object 1 and object 2 can overlap one another, resulting in a degradation of the fidelity of those signals. This, in turn, can reduce the accuracy of DOA estimations associated with both objects 1 and 2.

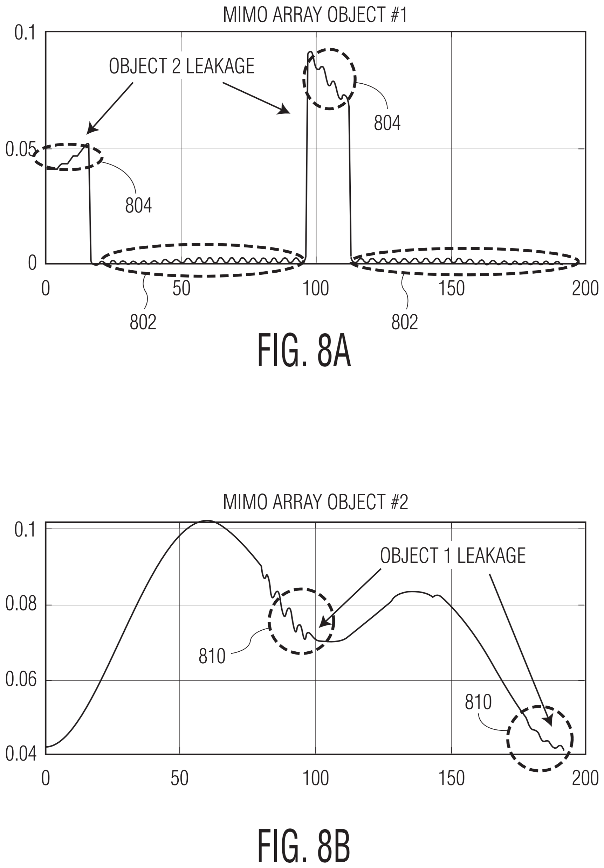

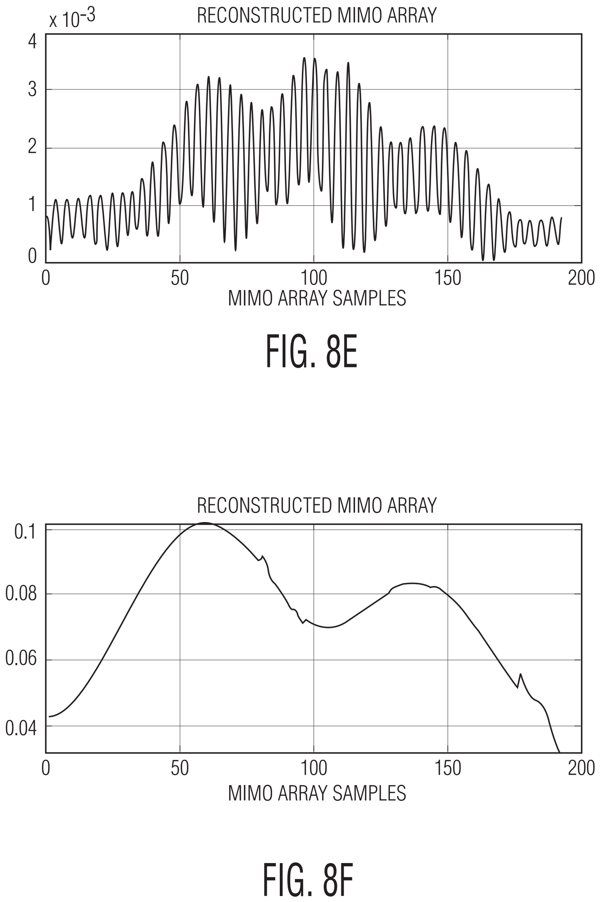

In both FIGS. 6 and 7 the size of the peaks of the triangles represent the magnitudes of the respective signals. In this disclosure it is acknowledged that when the signals associated with two objects overlap or are adjacent to one another (as described above with respect to FIGS. 6 and 7), the overlapping signal having the greater magnitude may have a greater distorting effect on the signal having lesser magnitude than vice versa. In that case, the present approach may be utilized to remove the overlap effects when performing DOA estimation for the object associated with the lower magnitude signal but may be ignored when performing DOA estimation for the object associated with the higher magnitude signal. This is depicted in FIGS. 8A and 8B.

Specifically, FIG. 8A depicts MIMO array data in which the signal associated with a first object is at least partially overlapped by a signal for a second object, where the second signal is substantially larger (e.g., having a magnitude larger or greater) than the first object signal. As illustrated, the signal associated with the first object, which would ordinarily resemble the signal in regions 802 of FIG. 8A, is significantly distorted in the regions experiencing overlap as depicted by the peaks of regions 804. The distortion results in two significant peaks in the MIMO data, which could otherwise render it difficult to extract the signals associated with the first object (e.g., the signal with regions 802 of FIG. 8A) out of the data for FIG. 8A.

Conversely, FIG. 8B depicts MIMO array data for the second object in which the signal associated with a second object is at least partially overlapped by a signal for the first object, where the second object signal is substantially larger (e.g., having a magnitude larger or greater) than the first object signal. As illustrated, the signal associated with the first object is largely unaffected by the signal overlap, which is reflected in the small perturbations in regions 820 of FIG. 8B. As such, in an embodiment of the present disclosure, in situations where a signal of much larger magnitude (e.g., 10 times or greater) is overlapped by a second smaller signal, the signal overlap may be ignored as the smaller signal does not represent a significant distortion of the larger signal.

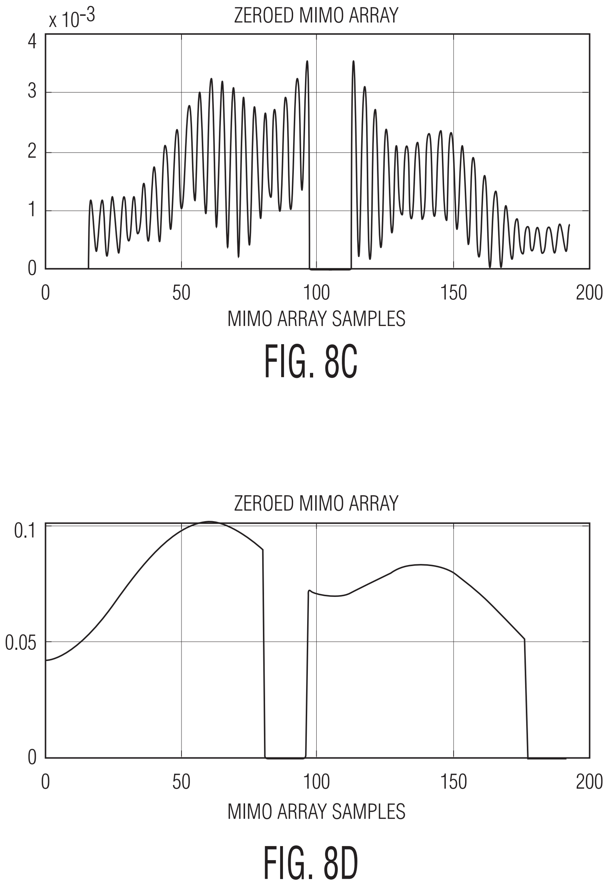

To mitigate this problem, the present disclosure provides an approach for detecting such overlap (or adjacent object signals) so that the overlapping data can be ignored or, alternatively, modified to account for the signal overlap. FIGS. 8C and 8D illustrate the MIMO data for objects 1 and 2 of FIG. 8A and 8B, respectively, in which the signal overlap regions have been zeroed out, in accordance with the present disclosure. With those regions zeroed out in accordance with the present disclosure, the original signals associated with object 1 and object 2 can be recreated, as illustrated in FIGS. E and F, respectively.

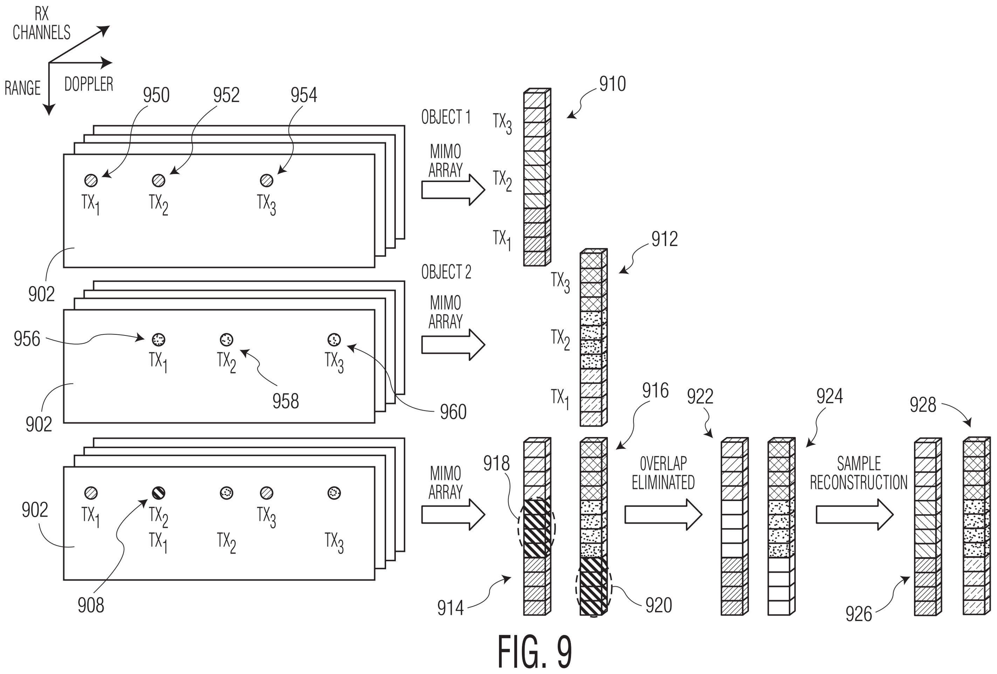

To further illustrate the present disclosure, FIG. 9 is graphical depiction of the present approach for detecting object signal overlap within RDM or RDBM data and mitigation of data corruption due to that overlap. In FIG. 9, a range-Doppler cube 902 that includes data for a first object. As illustrated, the vertical and horizontal directions of the first RDM of first range-Doppler cube 902 represent the Doppler and range dimensions for signals associated with a first object, respectively. The different layers of range-Doppler cube 902 represent signals associated with different receiver RX channels within range-Doppler cube 902. As depicted, across different channels (i.e., $RX_1$, $RX_2$, and $RX_3$) signals associated with a first object (e.g., TX signals 950, 952, and 954) are identified in different Doppler bins (resulting from the different Doppler division scheme applied at each transmitter).

As depicted in FIG. 9, range-Doppler cube 902 also includes data for a second object. As depicted, across different receiver channels (i.e., $RX_1$, $RX_2$, and $RX_3$) the second object is identified in different Doppler bins (resulting from the different Doppler division scheme applied at each transmitter) (e.g., signals 956, 958, and 960).

When the signals for object 1 and object 2 are shown together in range-Doppler cube 902, it is apparent that there is overlap 908 between the signal for object 1 generated by the signal transmitted by transmitted $TX_2$ (e.g., signal 952) and the signal for object 2 generated by the signal transmitted by transmitted $TX_1$ (e.g., signal 956). As described herein, that overlap can generate inaccuracies in the estimated DOA for object 1 and/or object 2.

Given a theoretical version of range-Doppler cube 902 that only includes data for object 1, an array of data 910 could be generated that represents the MIMO array for object 1 that combines the object 1 data associated with the transmitted signals $TX_1$, $TX_2$, and $TX_3$ for a given range (i.e., the range at which object 1 is present). Similarly, for a hypothetical range-Doppler cube 902 that only includes data for object 2, a similar array of data 912 could be generated for object 2 data for a given range (i.e., the range at which object 2 is present). Arrays of data 910 and 912 could then be processed to estimated DOA for both object 1 and object 2.

However, because the signals of object 1 and object 2 are both present within range-Doppler cube 902 and those signals overlap 908, such arrays cannot be generated for objects 1 and 2 by extracting data from range-Doppler cube 902. Instead, the MIMO array 914 for object 1 at a particular range within range-Doppler cube 902 will include some data (designated by dashed circle 918) that is corrupted due to overlap 908. Similarly, the MIMO array 916 for object 2 at that range within range-Doppler cube 902 will include some data (designated by dashed circle 920) that is corrupted due to overlap 908.

The present system is configured to detect the corrupted data in each MIMO array 916 and 918 and zero-out the corrupted values (see MIMO arrays 922 and 924). With the corrupted values zeroed-out, the present system may use various techniques (e.g., auto-regressive analysis) to replace or reconstruct the zeroed-out values to form complete MIMO arrays 926 and 928 for object 1 and object 2, respectively.

In a similar manner, the present system, as described herein, may detect potential data corruption resulting from partial overlap of signals for different objects occurring within the same Doppler bin of an RDM or RDBM.

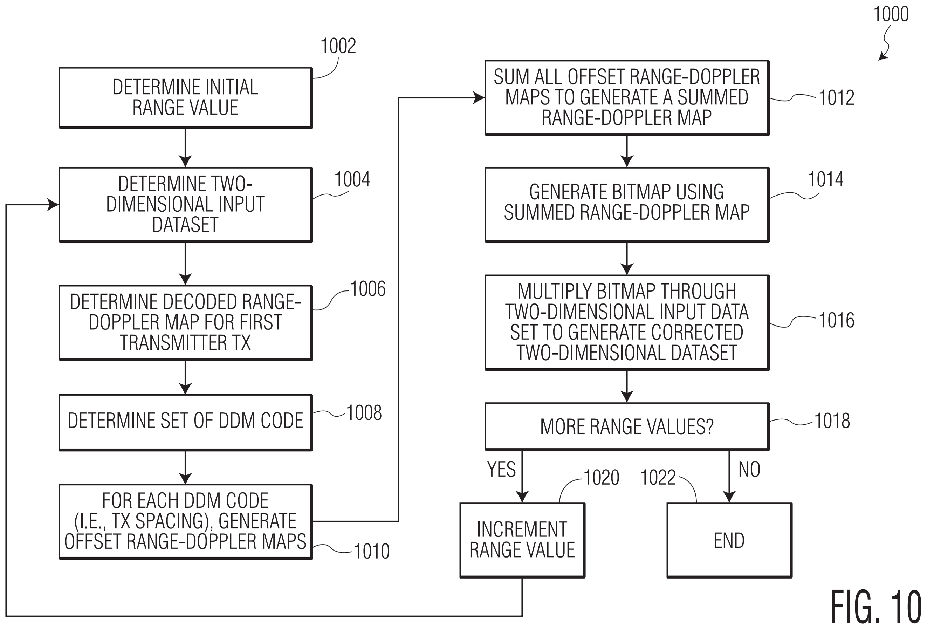

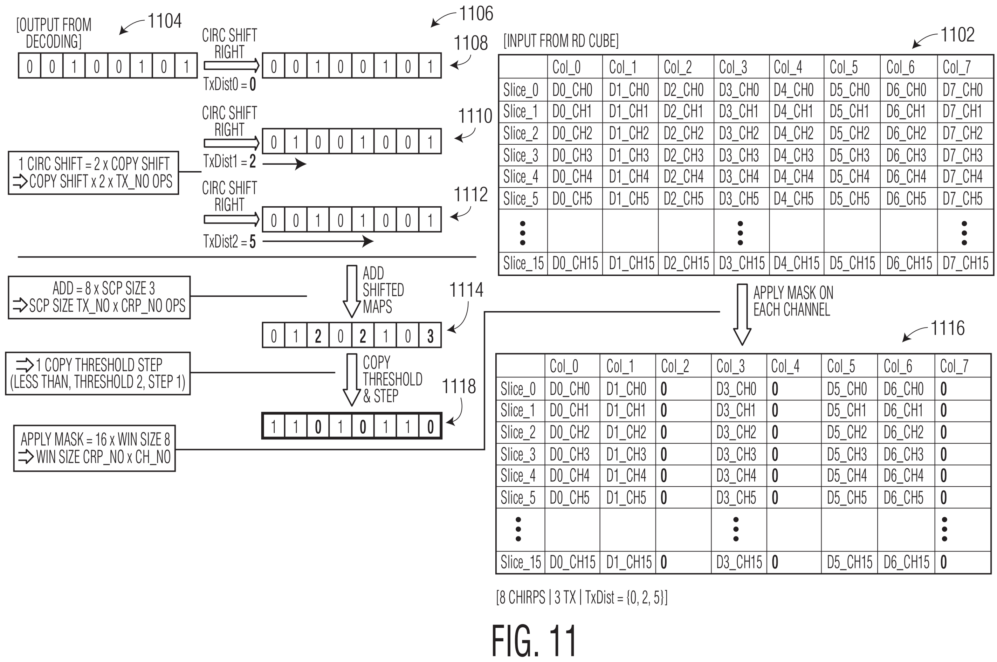

FIG. 10 is a flow chart depicting method 1000 for detecting Doppler spectrum overlap in DDM MIMO radar system RDMs and/or RDBMs. Method 1000 may be implemented to execute all or a portion of block 411, described above with respect to FIG. 4. Method 1000 may be performed using either or both of a radar controller and signal processor of a radar MCU (e.g., radar controller 108 and/or signal processor 110), in accordance with one or more embodiments. As such, method 100 is described with reference to elements of the radar system 100 of FIG. 1. However, it should be understood that this is illustrative and not limiting, at least in that other suitable radar systems may be used to carry out the method 1000 in one or more other embodiments. FIG. 11 is a diagram providing a graphical representation of steps of method 1000.

Method 1000 depicts the present approach for detecting Doppler signal overlap for a particular range-Doppler matrix or dataset, that may include, for example an RDBM. At block 1002, an initial range value is determined. Typically, this initial range value will be a minimum range value of the radar system, however in other embodiments any range value that corresponds to a range value of the radar system range-Doppler antenna cube may be selected as the initial range value.

At block 1004, an input in the form of a two-dimensional dataset is determined. The dataset may include a range slice of a range-Doppler cube taken at the range value determined at block 1002. In FIG. 11, table 1102 is a representation of the two-dimensional input dataset of block 1004.

At block 1006 a range-Doppler array is determined, which is a one-dimensional array containing binary values decoded from the two-dimensional dataset for the first receiver RX (e.g., with reference to table 1102 the range-Doppler array determined at block 1006 is equivalent to the array 1104, which is an array decoded from table 1102). The one-dimensional range-Doppler array contains binary values indicating whether a received signal is present at the different Doppler velocities for the first receiver RX signal. Specifically, a '1' value in a cell of the one-dimensional range-Doppler array would indicate that an object signal is present at the range, Doppler combination associated with that particular cell. Conversely, a '0' in a cell of one-dimensional range-Doppler array would indicate that an object signal is not present at the range, Doppler combination associated with that particular cell. An example of such a one-dimensional range-Doppler array is depicted in FIG. 11 by array 1104. In this particular example, array 1104 only contains 8 values indicating that the radar system operates with 8 distinct Doppler bins.

In an ideal radar system implementation, each range-Doppler array will only contain data associated with a single object in a single Doppler bin. That is, a signal transmitted by a particular transmitter will not generate reflected signals that overlap with or otherwise corrupt the signals being captured for other transmitters TX. However, as discussed above, due to potential high-velocity objects or reflections from nearby objects, reflected signal data represented in the range-Doppler array associated with a particular transmitter and a particular object may overlap with reflected signal data in the range-Doppler array associated with other transmitters and objects.

To detect and remedy that potential overlap, at block 1008, a set of DDM codes for the radar system is determined (typically the DDM codes are known values such that no computation is required to determine the codes - the DDM codes and/or the corresponding Doppler offset associated with the codes is simply retrieved from a memory), where the DDM codes determine the Doppler spacing between the various transmitter TX signals utilized by the radar system. Using those DDM codes, the original decoded range-Doppler array (e.g., determined at block 1006) is used to generate a set of offset range-Doppler arrays, where each new range-Doppler array is a copy of the original range-Doppler array offset in the Doppler domain by an amount determined by the DDM codes.

Accordingly, at block 1010, for each DDM code in the set of DDM codes, a new range-Doppler array is created by offsetting the original range-Doppler array by a TX spacing amount in the Doppler domain determined by the DDM codes.

For example, with reference to the example depicted in FIG. 11, the example radar systems operates using DDM codes that dictate three different TX spacings in the Doppler domain (e.g., TxDist0, which represent a TX spacing of 0 values in the Doppler domain, TxDist1, which represent a TX spacing of 2 values in the Doppler domain, and TxDist2, which represent a spacing of 5 values in the Doppler domain.

With that TX spacing determined by the radar systems DDM codes, a set of offset range-Doppler arrays 1106 are generated according to block 1010 of method 1000. Referring to FIG. 11, a first offset range-Doppler array 1108 having an offset of 0 values is generated, a second offset range-Doppler array 1110 having an offset of 2 values is generated, and a third offset range-Doppler array 1112 having an offset of 5 values is generated.

At block 1012, the set of offset range-Doppler arrays 1106 are summed together to generate a summed range-Doppler array 1114. To the extent the summed range-Doppler array 1114 only contains values of '0' or '1', that indicates that there was no signal overlap between the various Doppler-shifted versions of the range-Doppler array. However, if the summed range-Doppler map 1114 includes values equal to or greater than '2', that indicates signal overlap at that column. Accordingly, in the two-dimensional input dataset, those columns are "zeroed-out" by setting their values equal to zero across all transmitters to remove that signal overlap. With reference to table 1102, for example, columns in table 1102 that correspond to columns in the summed range-Doppler array 1114 that contain values equal to 2 or greater are forced to zero values to generate a corrected two-dimensional data set as illustrated by table 1116.

In an embodiment, this zeroing-out may be performed by generating a bitmap that is used to modify the input two-dimensional data set to remove values that may result in signal overlap. Accordingly, at block 1014, a bitmap is generated by determining an array having the same dimensions as the summed range-Doppler array. The bitmap is set to a value of '1' where the corresponding value in the summed range-Doppler array has a value of 0 or 1 (indicating no signal overlap), and to a value of '0' where the corresponding value in the summed range-Doppler array has a value of 2 or greater (indicating signal overlap). An example of the bitmap generated by block 1014 is shown as bitmap 1118 or FIG. 11.

With the bitmap 1118 determined, at block 1016, the bitmap is multiplied through each row in the two-dimensional dataset to force the values in columns that may cause Doppler spectrum overlap to zero values, while maintain the original values of columns that may not cause such overlap. With reference to FIG. 11, by multiplying each row in original input dataset (e.g., table 1102) by bitmap 1118, the corrected two-dimensional dataset represented by table 1116 is generated.

At block 1018 a determination is made (e.g., by a signal processor, such as signal processor 110 of FIG. 1) as to whether additional range values (e.g., within the range-Doppler antenna cube) are available for processing. If so, the range value is incremented at block 1020 and the method return to block 1004 to execute the same process against a new range slice of the RDBM, as corrected by the bitmap multiplication of block 1016. If, however, all range values have been processed, the method ends at block 1022. The radar system can then use the corrected data to perform DOA estimation pursuant to the methods described above.

According to method 1000, in an embodiment, overlapping values contained within the range Doppler maps generated by a DDM MIMO radar system are identified and zeroed-out. In another embodiment, both overlapping signal and signals that are adjacent to one another (i.e., partially overlapping signals) are zeroed-out. This modification can assist in removing interference and signal overlap due to data generated from signal side-lobes, for example.

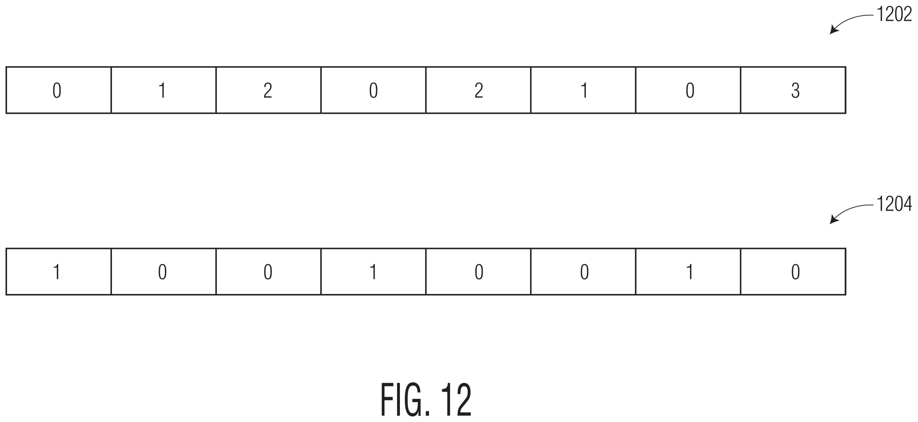

In such an embodiment, block 1014 may be implemented such that, in addition to setting values in the bitmap equal to zero where the corresponding value in the summed range-Doppler array has a value of 2 or greater (indicating signal overlap), values in the bitmap are also set to zero if a corresponding value in the summed range-Doppler array has a value of 1 or greater and is adjacent a value in the summed range-Doppler array that is also equal to 1 or greater. This approach is depicted in FIG. 12, in which FIG. 12 depicts an example summed range-Doppler array 1202 (e.g., the same summed range-Doppler array 1114 as depicted in FIG. 11) and the corresponding bitmap 1204 that may be generated in accordance with the present bitmap generation approach. As depicted, for each value in summed range-Doppler array 1202 that contains either a value equal to or greater than 2 (which indicates signal overlap), the corresponding value in the bitmap 1204 is set to a value of 0, which results in that value being 'zeroed-out' of the range Doppler data set. In addition, for each value in summed range-Doppler array 1202 that contains a value equal to or greater than 1 and that is adjacent to another value in the summed range-Doppler array 1202 having a value equal to or greater than 1 (which indicates potential or partial signal overlap), the corresponding value in the bitmap 1204 is set to a value of 0, which results in that value being 'zeroed-out' of the range Doppler data.

Once constructed, bitmap 1204 may be utilized in accordance with block 1016 to modify the original two-dimensional input data to remove Doppler spectrum overlapped and partially overlapped values therefrom.

In another embodiment, the present approach for Doppler spectrum overlap detection and mitigation may be adjusted so that when overlap occurs, the algorithm retains the signal if the overlap involves a strong signal being overlapped with a weaker signal. As discussed above with respect to FIGS. 8A - 8F and 9 when a strong signal is overlapped by a weaker signal, the stronger signal is largely intact and conventional DOA processing can proceed on the signal without significant reduction in inaccuracy. If, however, the overlap involves two signals of similar strength, significant distortion can occur to both signals and, as a result, those values will be zeroed-out in accordance with the present method.

In contrast to method 1000 of FIG. 10, this approach involves the processing of data set containing analog data, in which the different values in the various datasets being processed include analog signal magnitude values rather than binary values that only indicate the presence or absence of a signal.

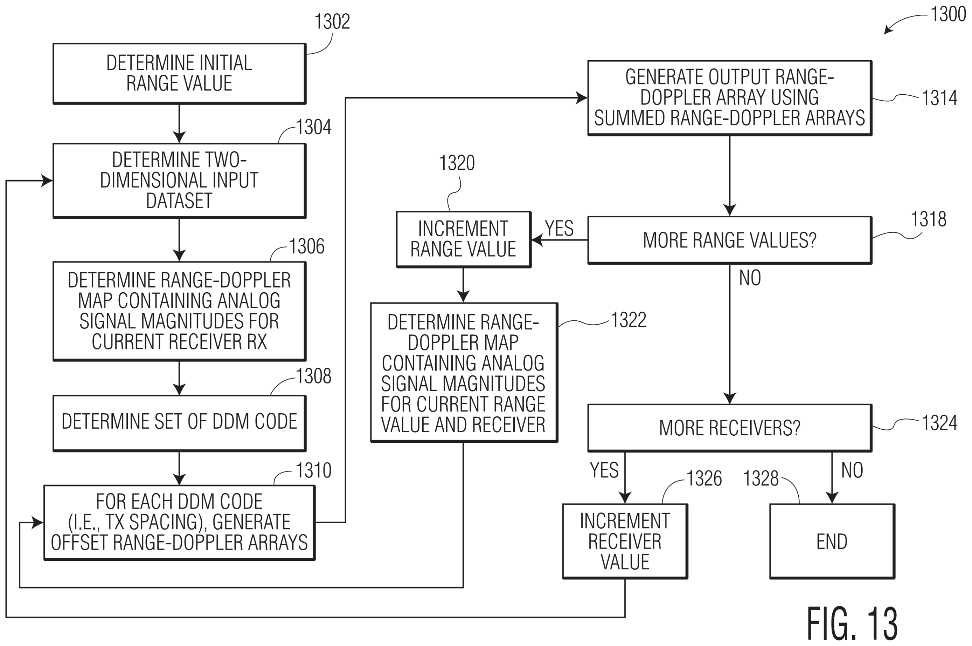

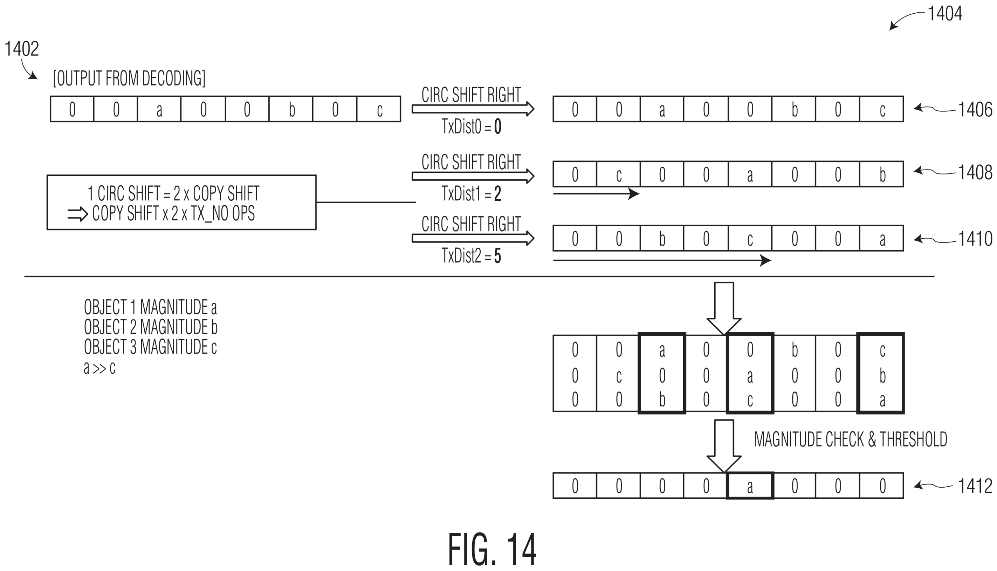

FIG. 13 is a flow chart depicting method 1300 for detecting Doppler spectrum overlap in DDM MIMO radar system RDBMs and mitigating that overlap based upon the magnitudes of overlapping signal. Method 1300 may be implemented to execute all or a portion of block 411, described above with respect to FIG. 4. Method 1300 may be performed using either or both of a radar controller and signal processor of a radar MCU (e.g., radar controller 108 and/or signal processor 110), in accordance with one or more embodiments. As such, method 1300 is described with reference to elements of the radar system 100 of FIG. 1. However, it should be understood that this is illustrative and not limiting, at least in that other suitable radar systems may be used to carry out the method 1300 in one or more other embodiments. FIG. 14 is a diagram providing a graphical representation of steps of method 1300.

Method 1300 depicts the present approach for detecting Doppler signal overlap for a particular range-Doppler matrix. At block 1302, an initial range value is determined. Typically, this initial range value will be a minimum range value of the radar system, however in other embodiments any range value that corresponds to a range value of the radar system range-Doppler antenna cube may be selected as the initial range value.

At block 1304, an input in the form of a two-dimensional dataset is determined. The dataset is a two-dimensional dataset that includes analog signal magnitude values for different Doppler bins and different receivers RX for the range value determined at block 1002. As such, the dataset may include a range-Doppler map that may, for example, be constructed via coherent or non-coherent integration among RX channels that contains power/magnitude levels. The analog values may be generated, for example, by multiplying a decoded range-Doppler map (that contains only binary values) with the analog magnitude values stored in coherently integrated RDM 500 of FIG. 5.

At block 1306 a range-Doppler array is determined, which is a one-dimensional array containing values extracted from the two-dimensional dataset for a first receiver RX of the radar system. The range-Doppler array contains analog values indicating a magnitude of a received signal at the different Doppler velocities for the first receiver RX. An example of such a range-Doppler array is depicted in FIG. 14 by array 1402. Array 1402 only contains 8 values indicating that the radar system operates with 8 distinct Doppler bins. Values a, b, and c in array 1402 represent analog signal values. In this example, the magnitude of the signal c is significantly larger than the values a and b. As used herein, one example of a magnitude of one signal being "significantly" larger than a magnitude of a second signal may occur when the magnitude of the first signal is around 10 times greater than the magnitude of the second signal. However, the determination of when one signal is to be considered significantly larger than another signal may rely on threshold values that are fine-tuned or otherwise determined based upon the specific implementation of a radar system. As such, the threshold could be around when one signal is five or 25 times greater than another signal, or may have other values.

To detect and remedy that potential overlap, at block 1308, a set of DDM codes for the radar system is determined (typically the DDM codes are known values such that no computation is required to determine the codes - the DDM codes and/or the corresponding Doppler offset associated with the codes is simply retrieved from a memory), where the DDM codes determined the Doppler spacing between the various transmitter TX signals utilized by the radar system. Using those DDM codes, the original decoded range-Doppler array (e.g., determined at step 1306) is used to generate a set of offset range-Doppler arrays, where each new range-Doppler array is a copy of the original range-Doppler array offset in the Doppler domain by an amount determined by the DDM codes.

Accordingly, at block 1310, for each DDM code in the set of DDM codes, a new range-Doppler array is created by offsetting the original range-Doppler array by a TX spacing amount in the Doppler domain determined by the DDM codes.

For example, with reference to the example depicted in FIG. 14, the example radar systems operates using DDM codes that dictate three different TX spacings in the Doppler domain (e.g., TxDist0, which represent a TX spacing of 0 values in the Doppler domain, TxDist1, which represent a TX spacing of 2 values in the Doppler domain, and TxDist2, which represent a spacing of 5 values in the Doppler domain).

With that TX spacing determined by the radar system's designated DDM codes, a set of offset range-Doppler arrays 1404 are generated according to block 1310 of method 1300. Referring to FIG. 14, a first offset range-Doppler map 1406 having an offset of 0 values is generated, a second offset range-Doppler map 1408 having an offset of 2 values is generated, and a third offset range-Doppler map 1410 having an offset of 5 values is generated.

At block 1314, the set of offset range-Doppler arrays 1404 are analyzed to generate an output range-Doppler array (an example is depicted by output range-Doppler array 1412 of FIG. 14). In this analysis, values in the output range-Doppler array are determined by the corresponding values in each array in the set of offset range-Doppler arrays 1404. If all the corresponding values in the set of offset range-Doppler arrays 1404 are equal to zero, this indicates no signal overlap (and, in fact, no signal) so the corresponding value in the output range-Doppler array is set to zero. This is depicted, for example, by the first column in output range-Doppler array 1412. If the corresponding values in the set of offset range-Doppler arrays 1404 are equal to zero except for one non-zero value, that indicates no overlap and the corresponding value in the output range-Doppler map is set to that non-zero value. If, however, the corresponding values in the set of offset range-Doppler arrays 1404 include two or more non-zero values, that indicates signal overlap and the corresponding value in the output range-Doppler array is set to zero to negate or remove that overlap signal. This is depicted in the third column of output range-Doppler array 1412. An exception may be applied, however, if the two or more non-zero values include a value that is significantly larger than the other non-zero values. In that case, the corresponding value in the output range-Doppler array is set to the largest of the non-zero values. This is illustrated in the fifth column of 1412 in which the non-zero value a is significantly larger (e.g., at least 10x greater) than the non-zero value c. In that case, the corresponding value in output range-Doppler map 1412 is set to the larger value a. When constructed, the output range-Doppler array is used, in conjunction with each of the output range-Doppler arrays generated at block 1314, by the radar system to perform object DOA analysis.

At block 1318 a determination is made (e.g., by a signal processor, such as signal processor 110 of FIG. 1) as to whether there are additional range values to be processed in the input dataset of block 1304. If so, the range value is incremented at block 1320 and a one-dimensional array containing analog signal magnitude values extracted from the two-dimensional dataset for the current receiver and the current range value. The method then returns to step 1310 to calculate a new set of offset range-Doppler arrays. If, however, at block 1318 there are no additional ranges (indicating all range values of the current two-dimensional dataset have been processed), at block 1324 a determination is made as to whether additional receivers RX. If so, at block 1326 the next receiver RX is selected and the method return to block 1304 in which a new two-dimensional dataset is determined for the current receiver. If there are no additional receivers at block 1324, the method ends at block 1328. The radar system can then use the corrected data generated at each iteration of block 1314 to perform DOA estimation pursuant to the methods described above.

In some aspects, the techniques described herein relate to a radar system including: a plurality of transmitter modules configured to transmit a plurality of transmitted radar signals in accordance with a Doppler Domain Multiplexing (DDM) scheme; a plurality of receiver modules configured to receive reflections of the plurality of transmitted radar signals reflected by at least one object and to generate digital signals based on the received reflections; a signal processor configured to: generate a range-Doppler antenna cube representing the digital signals, the range-Doppler antenna cube including at least a plurality of range bins and a plurality of Doppler bins; for each range bin of the plurality of range bins of the range-Doppler antenna cube: extract a range bin matrix from the range-Doppler antenna cube; determine a first range bin array associated with a first receiver module using the range bin matrix, wherein the first range bin array includes a plurality of values associated with different Doppler bins; determine an offset range bin array that includes the plurality of values of the first range bin array offset by a number of Doppler bins determined by the DDM scheme; determine a first Doppler bin in the first range bin array and the offset range bin array that each include non-zero values; and set a value associated with the first Doppler bin in the range bin array to a value of zero to generate a corrected range bin array; and determine an estimated direction of arrival of an object using the corrected range bin array.

In some aspects, the techniques described herein relate to a radar system, wherein the first range bin array is a first decoded bitmap and the offset range bin array is an offset version of the first decoded bitmap and wherein the signal processor, to determine the first Doppler bin in the first range bin array and the offset range bin array that each include non-zero values, is further configured to: add the first range bin array to the offset range bin array to generate a summed range bin array; and determine a first value in the summed range bin array associated with the first Doppler bin is equal to or greater than two.

In some aspects, the techniques described herein relate to a radar system, wherein the signal processor is configured to: determine two adjacent Doppler bins in the summed range bin array that are each associated with values in the summed range bin array that are equal to one or greater; and set the values associated with the two adjacent Doppler bins in the range bin array to values of zero to generate the corrected range bin array.

In some aspects, the techniques described herein relate to a radar system, wherein the signal processor, to set the value associated with the first Doppler bin in the range bin array to the value of zero to generate a corrected range bin array, is further configured to: determine a one-dimensional bitmap, wherein an index of each value in the one-dimensional bitmap corresponds to a Doppler bin of the range bin array; setting a first bitmap value in the one-dimensional bitmap to a value of '0', wherein the first bitmap value has an index corresponding to the first Doppler bin; and multiplying the one-dimensional bitmap by the range bin array to generate the corrected range bin array.

In some aspects, the techniques described herein relate to a radar system, wherein the first range bin array includes a plurality of analog values.

In some aspects, the techniques described herein relate to a radar system, wherein the signal processor, to determine the first Doppler bin in the first range bin array and the offset range bin array that each include non-zero values, is further configured to determine that a first non-zero value in the first range bin array at the first Doppler bin is within a threshold value of a second non-zero value in the offset range bin array at the first Doppler bin.

In some aspects, the techniques described herein relate to a radar system, wherein the threshold value indicates that the first non-zero value is within an order of magnitude of the second non-zero value.

In some aspects, the techniques described herein relate to a radar system including: a plurality of receiver modules configured to receive reflections of a plurality of transmitted radar signals; and a signal processor configured to:

extract a range bin matrix from a range-Doppler antenna cube generated using the reflections of the plurality of transmitted radar signals, determine a first range bin array that includes a plurality of values associated with different Doppler bins, determine an offset range bin array that includes the plurality of values of the first range bin array offset by a number of Doppler bins, determine a first Doppler bin in the first range bin array and the offset range bin array that each include non-zero values, and set the value associated with the first Doppler bin in the first range bin array to a value of zero to generate a corrected range bin array; and determine an estimated direction of arrival of an object using the corrected range bin array.

In some aspects, the techniques described herein relate to a radar system, wherein the plurality of transmitted radar signals are transmitted according to a Doppler Domain Multiplexing (DDM) scheme and the number of Doppler bins are determined by the DDM scheme.

In some aspects, the techniques described herein relate to a radar system, wherein the first range bin array is a first decoded bitmap and the offset range bin array is an offset version of the first decoded bitmap.

In some aspects, the techniques described herein relate to a radar system, wherein the signal processor, to determine the first Doppler bin in the first range bin array and the offset range bin array that each include non-zero values, is further configured to: add the first range bin array to the offset range bin array to generate a summed range bin array; and determine a first value in the summed range bin array associated with the first Doppler bin is equal to or greater than two.

In some aspects, the techniques described herein relate to a radar system, wherein the signal processor is configured to: determine two adjacent Doppler bins in the summed range bin array that are each associated with values in the summed range bin array that are equal to one or greater; and set the values associated with the two adjacent Doppler bins in the range bin array to values of zero to generate the corrected range bin array.

In some aspects, the techniques described herein relate to a radar system, wherein the signal processor, to set the value associated with the first Doppler bin in the range bin array to the value of zero to generate a corrected range bin array, is further configured to: determine a one-dimensional bitmap, wherein an index of each value in the one-dimensional bitmap corresponds to a Doppler bin of the range bin array; setting a first bitmap value in the one-dimensional bitmap to a value of '0', wherein the first bitmap value has an index corresponding to the first Doppler bin; and multiplying the one-dimensional bitmap by the range bin array to generate the corrected range bin array.

In some aspects, the techniques described herein relate to a radar system, wherein the first range bin array includes a plurality of analog values.

In some aspects, the techniques described herein relate to a radar system, wherein the signal processor, to determine the first Doppler bin in the first range bin array and the offset range bin array that each include non-zero values, is further configured to determine that a first non-zero value in the first range bin array at the first Doppler bin is within a threshold value of a second non-zero value in the offset range bin array at the first Doppler bin.

In some aspects, the techniques described herein relate to a radar system, wherein the threshold value indicates that the first non-zero value is within an order of magnitude of the second non-zero value.

In some aspects, the techniques described herein relate to a method, including: receiving, using a receiver system, reflections of a plurality of transmitted radar signals; extracting a range bin matrix from a range-Doppler antenna cube generated using the reflections of the plurality of transmitted radar signals; determining a first range bin array that includes a plurality of values associated with different Doppler bins; determining an offset range bin array that includes the plurality of values of the first range bin array offset by a number of Doppler bins; determining a first Doppler bin in the first range bin array and the offset range bin array that each include non-zero values; setting the value associated with the first Doppler bin in the first range bin array to a value of zero to generate a corrected range bin array; and determining an estimated direction of arrival of an object using the corrected range bin array.

In some aspects, the techniques described herein relate to a method, further including transmitting the plurality of transmitted radar signals according to a Doppler Domain Multiplexing (DDM) scheme and wherein the number of Doppler bins are determined by the DDM scheme.

In some aspects, the techniques described herein relate to a method, wherein the first range bin array is a first decoded bitmap and the offset range bin array is an offset version of the first decoded bitmap and further including, to determine the first Doppler bin in the first range bin array and the offset range bin array that each include non-zero values: adding the first range bin array to the offset range bin array to generate a summed range bin array; and determining a first value in the summed range bin array associated with the first Doppler bin is equal to or greater than two.

In some aspects, the techniques described herein relate to a method, further including: determining two adjacent Doppler bins in the summed range bin array that are each associated with values in the summed range bin array that are equal to one or greater; and setting the values associated with the two adjacent Doppler bins in the range bin array to values of zero to generate the corrected range bin array.

Although the examples have been described with reference to automotive radar systems, the systems and methods described herein may be implemented in conjunction with other types of radar systems.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first," "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1. A radar system comprising:

   a plurality of transmitter modules configured to transmit a plurality of transmitted radar signals in accordance with a Doppler Domain Multiplexing (DDM) scheme;
   a plurality of receiver modules configured to receive reflections of the plurality of transmitted radar signals reflected by at least one object and to generate digital signals based on the received reflections;
   a signal processor configured to:

   generate a range-Doppler antenna cube representing the digital signals, the range-Doppler antenna cube including at least a plurality of range bins and a plurality of Doppler bins;
   for each range bin of the plurality of range bins of the range-Doppler antenna cube:

   extract a range bin matrix from the range-Doppler antenna cube;
   determine a first range bin array associated with a first receiver module using the range bin matrix, wherein the first range bin array includes a plurality of values associated with different Doppler bins;
determine an offset range bin array that includes the plurality of values of the first range bin array offset by a number of Doppler bins determined by the DDM scheme;
determine a first Doppler bin in the first range bin array and the offset range bin array that each include non-zero values; and
set a value associated with the first Doppler bin in the range bin array to a value of zero to generate a corrected range bin array; and

   determine an estimated direction of arrival of an object using the corrected range bin array.

2. The radar system of claim 1, wherein the first range bin array is a first decoded bitmap and the offset range bin array is an offset version of the first decoded bitmap and wherein the signal processor, to determine the first Doppler bin in the first range bin array and the offset range bin array that each include non-zero values, is further configured to:

   add the first range bin array to the offset range bin array to generate a summed range bin array; and
   determine a first value in the summed range bin array associated with the first Doppler bin is equal to or greater than two.

3. The radar system of claim 2, wherein the signal processor is configured to:

   determine two adjacent Doppler bins in the summed range bin array that are each associated with values in the summed range bin array that are equal to one or greater; and
   set the values associated with the two adjacent Doppler bins in the range bin array to values of zero to generate the corrected range bin array.

4. The radar system according to any preceding claim wherein the signal processor, to set the value associated with the first Doppler bin in the range bin array to the value of zero to generate a corrected range bin array, is further configured to:

   determine a one-dimensional bitmap, wherein an index of each value in the one-dimensional bitmap corresponds to a Doppler bin of the range bin array;

setting a first bitmap value in the one-dimensional bitmap to a value of '0', wherein the first bitmap value has an index corresponding to the first Doppler bin; and

multiplying the one-dimensional bitmap by the range bin array to generate the corrected range bin array.

5. The radar system according to any preceding claim, wherein the first range bin array includes a plurality of analog values.

6. The radar system according to any preceding claim, wherein the signal processor, to determine the first Doppler bin in the first range bin array and the offset range bin array that each include non-zero values, is further configured to determine that a first non-zero value in the first range bin array at the first Doppler bin is within a threshold value of a second non-zero value in the offset range bin array at the first Doppler bin.

7. The radar system of claim 6, wherein the threshold value indicates that the first non-zero value is within an order of magnitude of the second non-zero value.

8. A method, comprising:

receiving, using a receiver system, reflections of a plurality of transmitted radar signals;

extracting a range bin matrix from a range-Doppler antenna cube generated using the reflections of the plurality of transmitted radar signals;

determining a first range bin array that includes a plurality of values associated with different Doppler bins;

determining an offset range bin array that includes the plurality of values of the first range bin array offset by a number of Doppler bins;

determining a first Doppler bin in the first range bin array and the offset range bin array that each include non-zero values;

setting the value associated with the first Doppler bin in the first range bin array to a value of zero to generate a corrected range bin array; and

determining an estimated direction of arrival of an object using the corrected range bin array.

9. The method of claim 8, further comprising transmitting the plurality of transmitted radar signals according to a Doppler Domain Multiplexing (DDM) scheme and wherein the number of Doppler bins are determined by the DDM scheme.

10. The method of claim 8 or claim 9, wherein the first range bin array is a first decoded bitmap and the offset range bin array is an offset version of the first decoded bitmap and further comprising, to determine the first Doppler bin in the first range bin array and the offset range bin array that each include non-zero values:

adding the first range bin array to the offset range bin array to generate a summed range bin array; and

determining a first value in the summed range bin array associated with the first Doppler bin is equal to or greater than two.

11. The method of any of claims 8 to 10 , further comprising:

determining two adjacent Doppler bins in the summed range bin array that are each associated with values in the summed range bin array that are equal to one or greater; and

setting the values associated with the two adjacent Doppler bins in the range bin array to values of zero to generate the corrected range bin array.

FIG. 1

4 TX DDM LINEAR CHIRP TRANSMISSION SCHEDULE
UNIFORM DOPPLER DIVISION

CIT: CHIRP INTERVAL TIME
PRI: PULSE REPETITION INTERVAL
PRF: PULSE REPETITION FREQUENCT = 1/PRI

FIG. 2

FIG. 3

FIG. 4

FIG. 5

EP 4 752 593 A1

FIG. 6

FIG. 7

FIG. 8A

FIG. 8B

FIG. 8C

FIG. 8D

RECONSTRUCTED MIMO ARRAY

FIG. 8E

RECONSTRUCTED MIMO ARRAY

FIG. 8F

FIG. 9

DETERMINE INITIAL
RANGE VALUE — 1002

DETERMINE TWO-
DIMENSIONAL INPUT
DATASET — 1004

DETERMINE DECODED RANGE-
DOPPLER MAP FOR FIRST
TRANSMITTER TX — 1006

DETERMINE SET OF DDM CODE — 1008

FOR EACH DDM CODE
(I.E., TX SPACING), GENERATE
OFFSET RANGE-DOPPLER MAPS — 1010

SUM ALL OFFSET RANGE-DOPPLER
MAPS TO GENERATE A SUMMED
RANGE-DOPPLER MAP — 1012

GENERATE BITMAP USING
SUMMED RANGE-DOPPLER MAP — 1014

MULTIPLY BITMAP THROUGH
TWO-DIMENSIONAL INPUT DATA
SET TO GENERATE CORRECTED
TWO-DIMENSIONAL DATASET — 1016

MORE RANGE VALUES? — 1018

YES

INCREMENT
RANGE VALUE — 1020

1022 — NO

END

1000

FIG. 10

[OUTPUT FROM DECODING] — 1104

| 0 | 0 | 1 | 0 | 0 | 1 | 0 | 1 |

CIRC SHIFT RIGHT — 1106

TxDist0 = 0 — 1108

| 0 | 0 | 1 | 0 | 0 | 1 | 0 | 1 |

CIRC SHIFT RIGHT

1 CIRC SHIFT = 2 x COPY SHIFT ⇒ COPY SHIFT x 2 x TX_NO OPS

TxDist1 = 2 — 1110

| 0 | 1 | 0 | 0 | 1 | 0 | 0 | 1 |

CIRC SHIFT RIGHT

TxDist2 = 5 — 1112

| 0 | 0 | 1 | 0 | 1 | 0 | 0 | 1 |

ADD SHIFTED MAPS

ADD = 8 x SCP SIZE 3 ⇒ SCP SIZE TX_NO x CRP_NO OPS

1114

| 0 | 1 | 2 | 0 | 2 | 1 | 0 | 3 |

COPY THRESHOLD & STEP

⇒ 1 COPY THRESHOLD STEP (LESS THAN, THRESHOLD 2, STEP 1)

1118

| 1 | 1 | 0 | 1 | 0 | 1 | 1 | 0 |

APPLY MASK = 16 x WIN SIZE 8 ⇒ WIN SIZE CRP_NO x CH_NO

[INPUT FROM RD CUBE] — 1102

|  | Col_0 | Col_1 | Col_2 | Col_3 | Col_4 | Col_5 | Col_6 | Col_7 |
|---|---|---|---|---|---|---|---|---|
| Slice_0 | D0_CH0 | D1_CH0 | D2_CH0 | D3_CH0 | D4_CH0 | D5_CH0 | D6_CH0 | D7_CH0 |
| Slice_1 | D0_CH1 | D1_CH1 | D2_CH1 | D3_CH1 | D4_CH1 | D5_CH1 | D6_CH1 | D7_CH1 |
| Slice_2 | D0_CH2 | D1_CH2 | D2_CH2 | D3_CH2 | D4_CH2 | D5_CH2 | D6_CH2 | D7_CH2 |
| Slice_3 | D0_CH3 | D1_CH3 | D2_CH3 | D3_CH3 | D4_CH3 | D5_CH3 | D6_CH3 | D7_CH3 |
| Slice_4 | D0_CH4 | D1_CH4 | D2_CH4 | D3_CH4 | D4_CH4 | D5_CH4 | D6_CH4 | D7_CH4 |
| Slice_5 | D0_CH5 | D1_CH5 | D2_CH5 | D3_CH5 | D4_CH5 | D5_CH5 | D6_CH5 | D7_CH5 |
| ⋮ |  |  |  | ⋮ |  |  |  | ⋮ |
| Slice_15 | D0_CH15 | D1_CH15 | D2_CH15 | D3_CH15 | D4_CH15 | D5_CH15 | D6_CH15 | D7_CH15 |

APPLY MASK ON EACH CHANNEL

1116

|  | Col_0 | Col_1 | Col_2 | Col_3 | Col_4 | Col_5 | Col_6 | Col_7 |
|---|---|---|---|---|---|---|---|---|
| Slice_0 | D0_CH0 | D1_CH0 | 0 | D3_CH0 | 0 | D5_CH0 | D6_CH0 | 0 |
| Slice_1 | D0_CH1 | D1_CH1 | 0 | D3_CH1 | 0 | D5_CH1 | D6_CH1 | 0 |
| Slice_2 | D0_CH2 | D1_CH2 | 0 | D3_CH2 | 0 | D5_CH2 | D6_CH2 | 0 |
| Slice_3 | D0_CH3 | D1_CH3 | 0 | D3_CH3 | 0 | D5_CH3 | D6_CH3 | 0 |
| Slice_4 | D0_CH4 | D1_CH4 | 0 | D3_CH4 | 0 | D5_CH4 | D6_CH4 | 0 |
| Slice_5 | D0_CH5 | D1_CH5 | 0 | D3_CH5 | 0 | D5_CH5 | D6_CH5 | 0 |
| ⋮ |  |  |  | ⋮ |  |  |  | ⋮ |
| Slice_15 | D0_CH15 | D1_CH15 | 0 | D3_CH15 | 0 | D5_CH15 | D6_CH15 | 0 |

[8 CHIRPS | 3 TX | TxDist = {0, 2, 5}]

FIG. 11

EP 4 752 593 A1

1202

| 0 | 1 | 2 | 0 | 2 | 1 | 0 | 3 |
|---|---|---|---|---|---|---|---|

1204

| 1 | 0 | 0 | 1 | 0 | 0 | 1 | 0 |
|---|---|---|---|---|---|---|---|

**FIG. 12**

FIG. 13

EP 4 752 593 A1

1404

1402

[OUTPUT FROM DECODING]

| 0 | 0 | a | 0 | 0 | b | 0 | c |

CIRC SHIFT RIGHT
TxDist0 = **0**

| 0 | 0 | a | 0 | 0 | b | 0 | c | ← 1406

1 CIRC SHIFT = 2 x COPY SHIFT
⟹ COPY SHIFT x 2 x TX_NO OPS

CIRC SHIFT RIGHT
TxDist1 = **2**

| 0 | c | 0 | 0 | a | 0 | 0 | b | ← 1408

CIRC SHIFT RIGHT
TxDist2 = **5**

| 0 | 0 | b | 0 | c | 0 | 0 | a | ← 1410

OBJECT 1 MAGNITUDE a
OBJECT 2 MAGNITUDE b
OBJECT 3 MAGNITUDE c
a >> c

| 0 | 0 | a | 0 | 0 | b | 0 | c |
| 0 | c | 0 | 0 | a | 0 | 0 | b |
| 0 | 0 | b | 0 | c | 0 | 0 | a |

MAGNITUDE CHECK & THRESHOLD

| 0 | 0 | 0 | 0 | a | 0 | 0 | 0 | ← 1412

FIG. 14

| Europäisches Patentamt European Patent Office Office européen des brevets | **EUROPEAN SEARCH REPORT** | **Application Number** EP 25 21 5485 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/171049 A1 (WU RYAN HAOYUN [US] ET AL) 2 June 2022 (2022-06-02) * paragraphs [0017], [0020], [0042], [0041], [0049] - [0054], [0061] * ----- | 1-11 | INV. G01S7/35 G01S13/34 G01S13/42 G01S13/58 G01S13/87 G01S13/931 |
| A | BALON SIEGFRED ET AL: "Discrimination of Transmitters in Equally-Spaced DDMA MIMO Radar Using a Correlation Feature and Neural Networks", 2024 IEEE RADAR CONFERENCE (RADARCONF24), IEEE, 6 May 2024 (2024-05-06), pages 1-6, XP034618350, DOI: 10.1109/RADARCONF2458775.2024.10548496 [retrieved on 2024-06-13] * Page 4, right column, Section III.A ,Page 5, Section III.E * ----- | 1-11 | |
| A | US 2024/302494 A1 (PEDLEY MARK [GB] ET AL) 12 September 2024 (2024-09-12) * paragraphs [0039] - [0041], [0089]; claim 1 * ----- | 1-11 | **TECHNICAL FIELDS SEARCHED (IPC)** G01S |
| A | SUN YULIANG ET AL: "Enhancing Unambiguous Velocity in Doppler-Division Multiplexing MIMO Radar", 2021 18TH EUROPEAN RADAR CONFERENCE (EURAD), EUROPEAN MICROWAVE ASSOCIATION (EUMA), 5 April 2022 (2022-04-05), pages 493-496, XP034131115, DOI: 10.23919/EURAD50154.2022.9784545 [retrieved on 2022-06-02] * the whole document * ----- -/-- | 1-11 | |

The present search report has been drawn up for all claims

| Place of search | Date of completion of the search | Examiner |
|---|---|---|
| Munich | 20 April 2026 | Metz, Carsten |

Europäisches
Patentamt

European
Patent Office

Office européen
des brevets

# EUROPEAN SEARCH REPORT

**Application Number**

EP 25 21 5485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/305103 A1 (NAM SANG HO [KR] ET AL) 28 September 2023 (2023-09-28) * paragraphs [0008], [0071] - [0074], [0092] * | 1-11 | |

TECHNICAL FIELDS
SEARCHED (IPC)

The present search report has been drawn up for all claims

| Place of search | Date of completion of the search | Examiner |
|---|---|---|
| Munich | 20 April 2026 | Metz, Carsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5485

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | Publication date | Patent family member(s) | Publication date |
|---|---|---|---|
| US 2022171049 A1 | 02-06-2022 | CN 114578358 A | 03-06-2022 |
| | | EP 4009074 A1 | 08-06-2022 |
| | | US 2022171049 A1 | 02-06-2022 |
| US 2024302494 A1 | 12-09-2024 | EP 4428572 A1 | 11-09-2024 |
| | | US 2024302494 A1 | 12-09-2024 |
| US 2023305103 A1 | 28-09-2023 | CN 116804737 A | 26-09-2023 |
| | | DE 102022106791 A1 | 28-09-2023 |
| | | JP 3241975 U | 18-05-2023 |
| | | KR 20230140385 A | 06-10-2023 |
| | | US 2023305103 A1 | 28-09-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RO A202400763